# EUROPÄISCHE PATENTSCHRIFT

(11) **EP 1 782 978 B1**
(45) Veröffentlichungstag und Bekanntmachung des Hinweises auf die Patenterteilung: **01.04.2009**
(21) Anmeldenummer: 06023126.3
(22) Anmeldetag: 07.11.2006
(51) Int. Cl.: B60J 1/16

(54) **Schiebefenster für eine mobile Arbeitsmaschine**
Sliding window for a mobile working machine
Vitre coulissante pour engin de travail mobile

(30) Priorität: 08.11.2005 DE 102005053272
(43) Veröffentlichungstag der Anmeldung: 09.05.2007
(73) Patentinhaber: Fahrzeugbau GmbH Geisa, 36419 Geisa (DE); Gratz Engineering GmbH, 74189 Weinsberg (DE)
(72) Erfinder: Ingelfinger, Dietmar, 74235 Erlenbach (DE); Kath, Andreas, 36419 Geisa (DE)
(74) Vertreter: Geirhos, Johann

(56) Entgegenhaltungen:
- EP-A1- 0 362 027
- DE-A1- 2 818 109
- GB-A- 783 986
- GB-A- 1 128 398
- US-A1- 2004 187 391

## Beschreibung

Die Erfindung betrifft ein Schiebefenster für eine mobile Arbeitsmaschine, insbesondere für ein Flurförderzeug, wobei das Schiebefenster eine an einem Karosseriebauteil oder an einer Türe befestigbare Führungsschiene und einen Scheibenträger aufweist.

Schiebefenster werden in mobilen Arbeitsmaschinen häufig eingesetzt. Bei der mobilen Arbeitsmaschine kann es sich beispielsweise um Flurförderzeuge, also z.B. um Gegengewichtsgabelstapler, Schubmaststapler, Schubgabelstapler oder Industrieschlepper mit geschlossener Fahrerkabine handeln. Das Schiebefenster weist mindestens eine Scheibe auf, die in im Wesentlichen horizontaler Richtung verschoben werden kann. Das Schiebefenster kann dabei an einem Karosserieteil einer Fahrerkabine der Arbeitsmaschine angeordnet sein. Häufig jedoch ist das Schiebefenster Bestandteil einer Türe der Arbeitsmaschine.

Aus dem Stand der Technik bekannte Schiebefenster weisen häufig einen Scheibenträger auf, der fest mit der Scheibe des Schiebefensters verbunden ist. An dem Karosseriebauteil bzw. der Tür ist eine Führungsschiene befestigt. Darüber hinaus bestehen bekannte Schiebefenster aus einer Vielzahl von Einzelteilen, mit denen die Befestigung und Führung des Scheibenträgers in der Führungsschiene realisiert ist. Die Montage und das Einstellen des Schiebefensters gestaltet sich dabei sehr aufwändig.

Ein gattungsgemäßes Schiebefenster für ein Fahrzeug ist aus der GB 783,986 A bekannt. Das Schiebefenster weist eine an einer Karosserie oder einer Tür angeordnete Führungsschiene auf, auf der ein Scheibenträger längsverschiebbar angeordnet ist. An dem Scheibenträger ist hierbei an den Enden der Scheibe jeweils ein Führungsschlitten befestigt, mittels denen der Scheibenträger auf der Führungsschiene längsverschiebbar gelagert ist. Zur Montage des Scheibenträgers mit der Führungsschiene sind die Führungsschlitten auf die Führungsschiene aufschiebbar. Die Führungsschiene ist hierzu mit zwei Ausnehmungen versehen, in die die Führungsschlitten zur Montage des Scheibenträgers eingebracht und anschließend auf das Führungsprofil aufgeschoben werden können.

Der vorliegenden Erfindung liegt die Aufgabe zugrunde, ein Schiebefenster zur Verfügung zu stellen, das aus wenigen Einzelteilen besteht und dabei einfach montierbar und einstellbar ist.

Diese Aufgabe wird erfindungsgemäß dadurch gelöst, dass der Scheibenträger auf die Führungsschiene aufgeklippt ist, derart, dass der Scheibenträger längs der Führungsschiene verschiebbar ist, wobei der Scheibenträger aus einem elastisch verformbaren Kunststoff ausgebildet ist. Bei dem Aufklippen handelt es sich um einen Montagevorgang, für den kein Werkzeug erforderlich ist. Während des Aufklippens wird der Scheibenträger elastisch verformt, wobei der Scheibenträger, wenn er endgültig montiert ist, wieder seine ursprüngliche Form einnimmt. Um den Scheibenträger wieder von der Führungsschiene zu lösen, muss der Scheibenträger erneut elastisch verformt werden. Die hierfür erforderlichen Kräfte treten weder während des Betriebs der Arbeitsmaschine, noch während des Betätigens des Schiebefensters auf. Damit ist die Scheibe durch Aufklippen des Scheibenträgers auf die Führungsschiene sicher befestigt. Die Führungsschiene ist an einer Türe oder an einem Karosserieteil einer Fahrerkabine der Arbeitsmaschine vorzugsweise durch Kleben befestigt. Zweckmäßigerweise befindet sich die Führungsschiene an der Unterkante des Fensterausschnitts. An der Oberkante des Fensterausschnitts und an den Seiten ist die Scheibe in Nuten geführt, die in die Türe bzw. die Karosserie selbst eingearbeitet sind. Der Scheibenträger ist hierbei derart auf die Führungsschiene aufgeklippt, dass der Scheibenträger längs der Führungsschiene verschiebbar ist. Die Klippverbindung zwischen Scheibenträger und Führungsschiene dient damit gleichzeitig zur Befestigung der Scheibe an der Führungsschiene und als Führung, die ein Verschieben der Scheibe ermöglicht. Im montierten Zustand weist die Klippverbindung so viel Spiel auf, dass ein Verschieben des Scheibenträgers gemeinsam mit der Scheibe relativ-zur Führungsschiene mit angemessener Betätigungskraft möglich ist. Der Scheibenträger ist aus einem elastisch verformbaren Kunststoff ausgebildet. Die erforderlichen Materialeigenschaften des Scheibenträgers - elastische Verformbarkeit bei gleichzeitig genauer Maßhaltigkeit - lassen sich am besten durch Kunststoff realisieren.

Eine besonders einfache Montage wird auch dadurch ermöglicht, dass der Scheibenträger auf die Scheibe aufgesteckt ist. Der Scheibenträger weist hierzu einen Längsschlitz auf, mit welcher der Scheibenträger auf eine Kante der Scheibe aufgesteckt wird. Die Breite des Schlitzes ist dabei so bemessen, dass die Scheibe in dem Schlitz festgeklemmt wird. Die Klemmkraft wird durch eine elastische Verformung des Scheibenträgers im Bereich des Schlitzes erzeugt.

Die Führungsschiene ist vorzugsweise aus Aluminium oder einer Aluminiumlegierung ausgebildet. Hierbei kann die Führungsschiene kostengünstig und mit geringen Fertigungstoleranzen beispielsweise durch Strangpressen hergestellt werden.

Zweckmäßig ist es hierbei, wenn ein Führungsabschnitt der Führungsschiene, auf den der Scheibenträger aufgeklippt ist, einen im Wesentlichen kreisförmigen Querschnitt aufweist. Der Führungsabschnitt der Führungsschiene ist dabei über einen relativ schmalen Steg mit den übrigen Teilen der Führungsschiene verbunden. Abgesehen von dem Steg ist der Querschnitt des Führungsabschnitts der Führungsschiene kreisförmig.

Analog hierzu ist es zweckmäßig, wenn ein Führungsabschnitt des Scheibenträgers, mit dem der Scheibenträger auf die Führungsschiene aufgeklippt ist, im Wesentlichen den Querschnitt eines Kreisringsegments aufweist. Das Kreisringsegment erstreckt sich dabei über einen Umfangswinkel von ca. 270 Grad, sodass der montierte Scheibenträger in alle Richtungen an der Führungsschiene festgelegt ist. In montiertem Zustand erstreckt sich der Steg des Führungsabschnitts der Führungsschiene durch die Öffnung des Kreisringsegments.

Eine Klippverbindung wird dadurch ermöglicht, dass in nicht verformtem Zustand des Scheibenträgers die seitliche Öffnung des Kreisringsegments zumindest geringfügig kleiner ist als der Durchmesser des kreisförmigen Querschnitts des Führungsabschnitts der Führungsschiene. Dies bedeutet, dass das Kreisringsegment elastisch aufgebogen werden muss, um den Scheibenträger auf den Führungsabschnitt der Führungsschiene zu klippen. Eine entsprechende elastische Verformung des Kreisringsegments ist erforderlich, um den aufgeklippten Scheibenträger wieder zu entfernen.

In nicht verformtem Zustand des Scheibenträgers ist der Innendurchmesser des Kreisringsegments zumindest geringfügig größer als der Durchmesser des kreisförmigen Querschnitts des Führungsabschnitts der Führungsschiene. Die Klippverbindung der Führungsschiene mit dem Scheibenträger besitzt somit ein geringes Spiel. Dieses Spiel bewirkt, dass der Scheibenträger mit der daran befestigten Scheibe längs des Scheibenträgers verschoben werden kann.

Gemäß einer Weiterbildung der Erfindung ist mindestens ein Versteifungselement vorgesehen, mit dem die elastische Verformbarkeit des Führungsabschnitts des Scheibenträgers reduzierbar ist. Das Versteifungselement wird angebracht, wenn der Scheibenträger auf die Führungsschiene aufgeklippt ist. Der Scheibenträger kann dann nicht mehr von der Führungsschiene entfernt werden und ist damit gesichert.

Weiter ist es zweckmäßig, wenn mindestens ein Einstellelement vorgesehen ist, mit dem der Durchmesser des kreisringsegmentförmigen Führungsabschnitts des Scheibenträgers einstellbar ist. Über den Durchmesser des kreisringsegmentförmigen Führungsabschnitts kann die Kraft eingestellt werden, die erforderlich ist, um den Scheibenträger längs der Führungsschiene zu verschieben.

Eine besonders einfache Anordnung liegt vor, wenn das Versteifungselement und das Einstellelement von demselben Bauteil gebildet sind. Die Anzahl der Einzelteile des Schiebefensters ist hierdurch minimiert, ebenso die Anzahl der während der Montage durchzuführenden Arbeitsschritte.

Gemäß einer zweckmäßigen Ausgestaltung der Erfindung ist das Bauteil, das gleichzeitig das Versteifungselement und das Einstellelement bildet, in die Stirnseite des kreisringsegmentförmigen Führungsabschnitts des Scheibenträgers einsetzbar. Hierbei sind verschiedene Ausführungen möglich. Das Bauteil kann beispielsweise in eine Öffnung in der Stirnseite eingeschoben, eingeschraubt oder im Bereich der Stirnseite geklemmt werden.

Mit besonderem Vorteil ist das Bauteil, das gleichzeitig das Versteifungselement und das Einstellelement bildet, von einer Einschlaghülse gebildet. Die Einschlaghülse wird dabei durch eine von außen ausgeübte Kraft in eine entsprechende Öffnung in der Stirnseite des kreisringsegmentförmigen Führungsabschnitts des Scheibenträgers hineinbewegt. Der Durchmesser des kreisringsegmentförmigen Führungsabschnitts und damit die zum Schieben des Scheibenträgers erforderliche Kraft ist durch den Durchmesser und die Wandstärke der Einschlaghülse definiert.

Zweckmäßig ist es weiter, wenn das Bauteil, das gleichzeitig das Versteifungselement und das Einstellelement bildet, einen kreisringsegmentförmigen Querschnitt aufweist.

Der Durchmesser des Bauteils entspricht dabei in etwa dem mittleren Durchmesser des kreisringförmigen Abschnitts des Scheibenträgers.

Das Bauteil, das gleichzeitig das Versteifungselement und das Einstellelement bildet, ist vorzugsweise aus Metall ausgebildet. Das metallische Bauteil weist eine höhere Steifigkeit auf als der aus Kunststoff ausgeführte Scheibenträger und ist deshalb geeignet, den Führungsabschnitt des Scheibenträgers geringfügig zu verformen (Einstellelement) und eine elastische Verformung des Führungsabschnitts durch äußere Kräfte weitgehend zu verhindern (Versteifungselement).

Gegenstand der Erfindung ist ebenfalls ein Scheibenträger zur Verwendung in dem oben beschriebenen Schiebefenster. Ein weiterer Gegenstand der Erfindung ist eine Führungsschiene zur Verwendung in dem oben beschriebenen Schiebefenster.

Weitere Vorteile und Einzelheiten der Erfindung werden anhand des in den schematischen Figuren dargestellten Ausführungsbeispiels näher erläutert. Dabei zeigt
- Figur 1: eine Tür einer Arbeitsmaschine mit einem erfindungsgemäßen Schiebefenster,
- Figur 2: einen Ausschnitt des Schiebefensters.

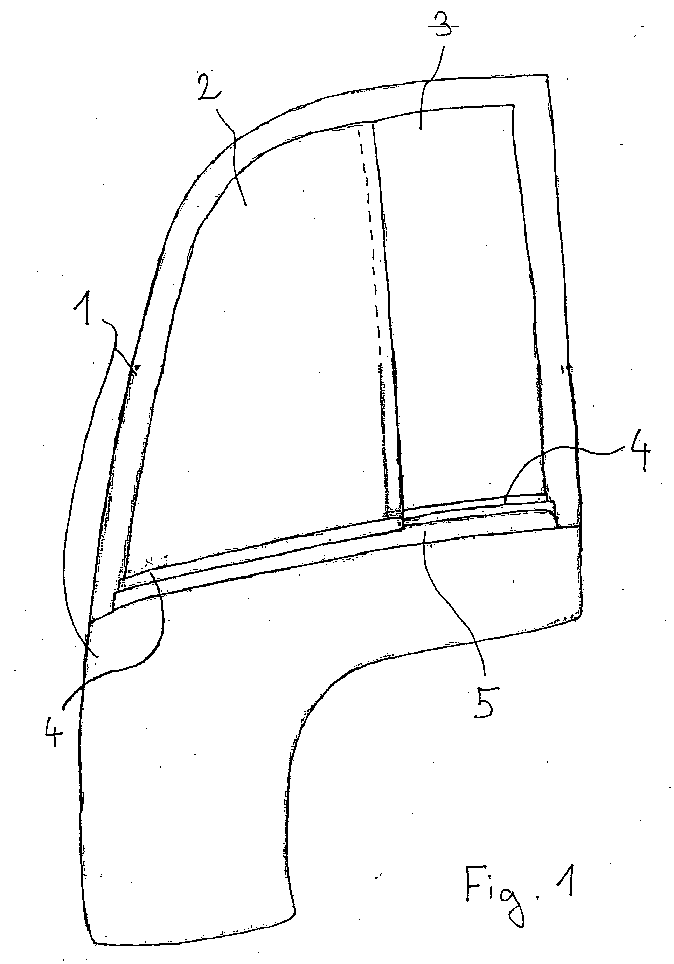

In Figur 1 ist eine Tür einer Arbeitsmaschine mit einem erfindungsgemäßen Schiebefenster dargestellt. Die Tür ist aus mehren Profilen und Blechen zusammengesetzt, die gemeinsam einen tragenden Rahmen 1 der Tür bilden. In einem Fensterausschnitt der Tür befindet sich ein Schiebefenster mit zwei im Wesentlichen in horizontaler Richtung verschiebbaren Scheiben 2, 3. Zur verschiebbaren Führung der Scheiben 2, 3 ist im unteren Bereich jeder Scheibe 2, 3 ein Scheibenträger 4 aufgesteckt, der auf eine Führungsschiene 5 geklippt ist, welche am Rahmen 1 der Tür durch Kleben befestigt ist. Im seitlichen und im oberen Bereich der Fensteröffnung sind die Scheiben 2, 3 in Nuten des Rahmens 1 geführt. Ausgehend von der dargestellten Position kann die äußere Scheibe 2 nach rechts und/oder die innere Scheibe 3 nach links verschoben werden. Die Führungsschiene 5 und die Scheibenträger 4 sind im vorliegenden Ausführungsbeispiel geringfügig gebogen, wobei der Krümmungsradius über die gesamte Länge der Führungsschiene 5 bzw. der Scheibenträger 4 im Wesentlichen konstant ist. Möglich ist es ebenfalls, Führungsschiene 5 und Scheibenträger 4 gerade auszuführen.

Die Montage des erfindungsgemäßen Schiebefensters ist besonders einfach und kann mit wenigen Einzelteilen erfolgen. Diese Vorteile werden insbesondere dadurch erreicht, dass jeder der Scheibenträger 4 auf die Scheibe 2 bzw. 3 aufgesteckt ist und auf die Führungsschiene 5 aufgeklippt ist.

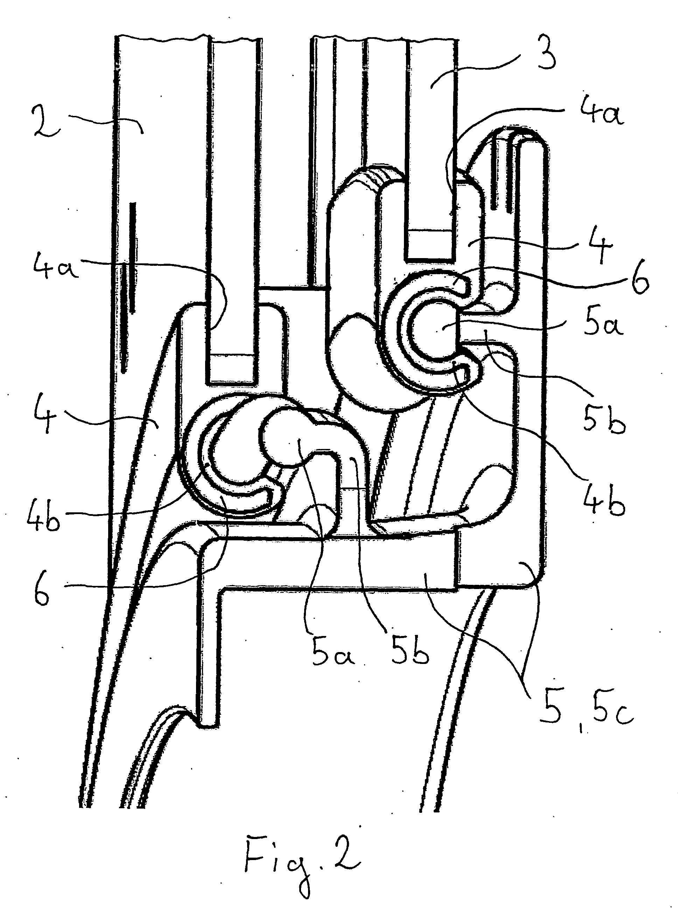

Figur 2 zeigt einen Ausschnitt des Schiebefensters mit der Führungsschiene 5, den Scheibenträgern 4 und den Scheiben 2, 3 im Detail. Die Scheibenträger 4 weisen auf der Oberseite eine Nut 4a auf, in die die Scheiben 2, 3 vor der Montage gesteckt werden. Die Nut 4a ist derart geformt und bemessen, dass sich die Scheibe 2 bzw. 3 in der Nut 4a festklemmt. Ein Verrutschen der Scheibe 2 bzw. 3 relativ zum Scheibenträger 4 während des Betriebs ist hierdurch verhindert.

Die Führungsschiene 5 weist für die äußere Scheibe 2 und für die innere Scheibe 3 jeweils einen Führungsabschnitt 5a auf. Jeder Führungsabschnitt 5a erstreckt sich über die gesamte Länge der Führungsschiene 5 und besitzt einen kreisförmigen Querschnitt, der über einen Steg 5b mit dem Hauptkörper 5c der Führungsschiene 5 verbunden ist. Als Gegenstück zu dem Führungsabschnitt 5a der Führungsschiene 5 besitzt der Scheibenträger 4 einen Führungsabschnitt 4b in der Form eines Kreisringsegments. In der Darstellung gemäß Figur 2 ist der Führungsabschnitt 4b auf den Führungsabschnitt 5a aufgeklippt. Der Steg 5b erstreckt sich dabei durch die Öffnung des Kreisringsegments. Während des Aufklippens des Scheibenträgers 4 wird der Führungsabschnitt 4b des Scheibenträgers 4 so weit elastisch verformt, dass die Öffnung des Kreisringsegments dem Durchmesser des kreisförmigen Querschnitts des Führungsabschnitts 5a der Führungsschiene 5 entspricht. Gleiches gilt für das Abklippen, also dem Entfernen des Scheibenträgers 4 von der Führungsschiene 5.

Wie zu erkennen ist, befindet sich in mindestens einer Stirnseite jedes Scheibenträgers 4, vorzugsweise in beiden Stirnseiten, ein Bauteil 6, das gleichzeitig ein Einstellelement und ein Versteifungselement darstellt. In der Funktion als Einstellelement stellt das Bauteil 6 den Durchmesser des Kreisringsegments so ein, dass ein Verschieben des Scheibenträgers 4 relativ zur Führungsschiene 5 mit einer angemessenen Betätigungskraft möglich ist. In der Funktion als Versteifungselement verhindert das Bauteil 6 eine elastische Verformung des Kreisringsegments und sichert damit den Scheibenträger 4 gegen ein unbeabsichtigtes Lösen von der Führungsschiene 5. Im vorliegenden Ausführungsbeispiel ist das Bauteil 6 von einer metallischen Einschlaghülse gebildet, die nach dem Aufklippen des Scheibenträgers 4 auf die Führungsschiene 5 in eine vorbereitete Nut im Scheibenträger 4 getrieben wird.

Die Montage des Schiebefensters an der Tür erfolgt in folgender Reihenfolge:
- Aufkleben der Führungsschiene 5 auf dem Rahmen 1 der Tür,
- Festklemmen der Scheibenträger 4 an den Unterkanten der Scheiben 2, 3,
- Einfädeln der inneren Scheibe 3 in eine hintere Nut am oberen Rahmen 1 der Tür und Aufklippen des Scheibenträgers 4 auf den oberen Führungsabschnitt 5a der Führungsschiene,
- Einfädeln der äußeren Scheibe 3 in eine vordere Nut am oberen Rahmen 1 der Tür und Aufklippen des Scheibenträgers 4 auf den unteren Führungsabschnitt 5a der Führungsschiene 5,
- Einschlagen aller Bauteile 6 zum Einstellen und Versteifen der Scheibenträger 4 in die Stimseiten der Führungsabschnitte 4b.

Eine Demontage erfolgt in umgekehrter Reihenfolge.

## Patentansprüche

1. Schiebefenster für eine mobile Arbeitsmaschine, insbesondere für ein Flurförderzeug, wobei das Schiebefenster eine an einem Karosseriebauteil oder an einer Türe befestigbare Führungsschiene (5) und einen Scheibenträger (4) aufweist, **dadurch gekennzeichnet, dass** der Scheibenträger (4) auf die Führungsschiene (5) aufgeklippt ist, derart, dass der Scheibenträger (4) längs der Führungsschiene (5) verschiebbar ist, wobei der Scheibenträger (4) aus einem elastisch verformbaren Kunststoff ausgebildet ist.

2. Schiebefenster nach Anspruch 1, **dadurch gekennzeichnet, dass** der Scheibenträger (4) auf die Scheibe (2, 3) aufgesteckt ist.

3. Schiebefenster nach Anspruch 1 oder 2, **dadurch gekennzeichnet, dass** die Führungsschiene (5) aus Aluminium oder einer Aluminiumlegierung ausgebildet ist.

4. Schiebefenster nach einem der Ansprüche 1 bis 3, **dadurch gekennzeichnet, dass** ein Führungsabschnitt (5a) der Führungsschiene (5), auf den der Scheibenträger (4) aufgeklippt ist, einen im Wesentlichen kreisförmigen Querschnitt aufweist.

5. Schiebefenster nach einem der Ansprüche 1 bis 4, **dadurch gekennzeichnet, dass** ein Führungsabschnitt (4b) des Scheibenträgers (4), mit dem der Scheibenträger (4) auf die Führungsschiene (5) ausgekippt ist, im Wesentlichen den Querschnitt eines Kreisringsegments aufweist.

6. Schiebefenster nach Anspruch 5, **dadurch gekennzeichnet, dass** in nicht verformtem Zustand des Scheibenträgers (4) die seitliche Öffnung des Kreisringsegments zumindest geringfügig kleiner ist als der Durchmesser des kreisförmigen Querschnitts des Führungsabschnitts (5a) der Führungsschiene (5).

7. Schiebefenster nach Anspruch 5 oder 6, **dadurch gekennzeichnet, dass** in nicht verformtem Zustand des Scheibenträgers (4) der Innendurchmesser des Kreisringsegments zumindest geringfügig größer ist, als der Durchmesser des kreisförmigen Querschnitts des Führungsabschnitts (5a) der Führungsschiene (5).

8. Schiebefenster nach einem der Ansprüche 5 bis 7, **dadurch gekennzeichnet, dass** mindestens ein Versteifungselement vorgesehen ist, mit dem die elastische Verformbarkeit des Führungsabschnitts (4b) des Scheibenträgers (4) reduzierbar ist.

9. Schiebefenster nach einem der Ansprüche 5 bis 8, **dadurch gekennzeichnet, dass** mindestens ein Einstellelement vorgesehen ist, mit dem der Durchmesser des kreisringsegmentförmigen Führungsabschnitts (4b) des Scheibenträgers (4) einstellbar ist.

10. Schiebefenster nach Anspruch 9, **dadurch gekennzeichnet, dass** das Versteifungselement und das Einstellelement von demselben Bauteil (6) gebildet sind.

11. Schiebefenster nach Anspruch 10, **dadurch gekennzeichnet, dass** das Bauteil (6), das gleichzeitig das Versteifungselement und das Einstellelement bildet, in die Stirnseite des kreisringsegmentförmigen Führungsabschnitts (4b) des Scheibenträgers (4) einsetzbar ist.

12. Schiebefenster nach Anspruch 10 oder 11, **dadurch gekennzeichnet, dass** das Bauteil (6), das gleichzeitig das Versteifungselement und das Einstellelement bildet, von einer Einschlaghülse gebildet ist.

13. Schiebefenster nach einem der Ansprüche 10 bis 12, **dadurch gekennzeichnet, dass** das Bauteil (6), das gleichzeitig das Versteifungselement und das Einstellelement bildet, einen kreisringsegmentförmigen Querschnitt aufweist.

14. Schiebefenster nach einem der Ansprüche 10 bis 13, **dadurch gekennzeichnet, dass** das Bauteil (6), das gleichzeitig das Versteifungselement und das Einstellelement bildet, aus Metall ausgebildet ist.

## Claims

1. Sliding window for a mobile working machine, in particular for an industrial truck, the sliding window having a guide rail (5), which can be fastened on a vehicle body part or on a door, and a window pane mount (4), **characterized in that** the window pane mount (4) is clipped onto the guide rail (5) in such a way that the window pane mount (4) is displaceable along the guide rail (5), the window pane mount (4) being formed from an elastically deformable plastic.

2. Sliding window according to Claim 1, **characterized in that** the window pane mount (4) is plugged onto the window pane (2, 3).

3. Sliding window according to Claim 1 or 2, **characterized in that** the guide rail (5) is formed from aluminium or an aluminium alloy.

4. Sliding window according to one of Claims 1 to 3, **characterized in that** a guide section (5a) of the guide rail (5) onto which the window pane mount (4) is clipped has a substantially circular cross section.

5. Sliding window according to one of Claims 1 to 4, **characterized in that** a guide section (4b) of the window pane mount (4) with which the window pane mount (4) is clipped onto the guide rail (5) has substantially the cross section of a circular ring segment.

6. Sliding window according to Claim 5, **characterized in that**, in the undeformed state of the window pane mount (4), the lateral opening of the circular ring segment is at least slightly smaller than the diameter of the circular cross section of the guide section (5a) of the guide rail (5).

7. Sliding window according to Claim 5 or 6, **characterized in that**, in the undeformed state of the window pane mount (4), the inner diameter of the circular ring segment is at least slightly larger than the diameter of the circular cross section of the guide section (5a) of the guide rail (5).

8. Sliding window according to one of Claims 5 to 7, **characterized in that** at least one reinforcing element is provided with which the elastic deformability of the guide section (4b) of the window pane mount (4) can be reduced.

9. Sliding window according to one of Claims 5 to 8, **characterized in that** at least one adjusting element is provided with which the diameter of the guide section (4b), in the form of a circular ring segment, of the window pane mount (4) can be adjusted.

10. Sliding window according to Claim 9, **characterized in that** the reinforcing element and the adjusting element are formed by the same component part (6).

11. Sliding window according to Claim 10, **characterized in that** the component part (6), which at the same time forms the reinforcing element and the adjusting element, can be inserted into the end side of the guide section (4b), in the form of a circular ring segment, of the window pane mount (4).

12. Sliding window according to Claim 10 or 11, **characterized in that** the component part (6), which at the same time forms the reinforcing element and the adjusting element, is formed by a knock-in sleeve.

13. Sliding window according to one of Claims 10 to 12, **characterized in that** the component part (6), which at the same time forms the reinforcing element and the adjusting element, has a cross section in the form of a circular ring segment.

14. Sliding window according to one of Claims 10 to 13, **characterized in that** the component part (6), which at the same time forms the reinforcing element and the adjusting element, is formed from metal.

## Revendications

1. Fenêtre coulissante pour un engin de travail mobile, notamment un chariot de manutention, la fenêtre coulissante présentant un rail de guidage (5) pouvant être fixé sur un composant de la carrosserie ou sur une porte, et un support de vitre (4), **caractérisée en ce que** le support de vitre (4) est enclipsé sur le rail de guidage (5), de telle sorte que le support de vitre (4) puisse coulisser le long du rail de guidage (5), le support de vitre (4) étant réalisé en un plastique déformable élastiquement.

2. Fenêtre coulissante selon la revendication 1, **caractérisée en ce que** le support de vitre (4) est enfiché sur la vitre (2, 3).

3. Fenêtre coulissante selon la revendication 1 ou 2, **caractérisée en ce que** le rail de guidage (5) est réalisé en aluminium ou en un alliage d'aluminium.

4. Fenêtre coulissante selon l'une quelconque des revendications 1 à 3, **caractérisée en ce qu'**une portion de guidage (5a) du rail de guidage (5) sur laquelle est enclipsé le support de vitre (4), présente une section transversale essentiellement circulaire.

5. Fenêtre coulissante selon l'une quelconque des revendications 1 à 4, **caractérisée en ce qu'**une portion de guidage (4b) du support de vitre (4), avec laquelle le support de vitre (4) est enclipsé sur le rail de guidage (5), présente essentiellement la section transversale d'un segment annulaire circulaire.

6. Fenêtre coulissante selon la revendication 5, **caractérisée en ce que** dans l'état non déformé du support de vitre (4), l'ouverture latérale du segment annulaire circulaire est au moins légèrement plus petite que le diamètre de la section transversale circulaire de la portion de guidage (5a) du rail de guidage (5).

7. Fenêtre coulissante selon la revendication 5 ou 6, **caractérisée en ce que** dans l'état non déformé du support de vitre (4), le diamètre intérieur du segment annulaire circulaire est au moins légèrement plus grand que le diamètre de la section transversale circulaire de la portion de guidage (5a) du rail de guidage (5).

8. Fenêtre coulissante selon l'une quelconque des revendications 5 à 7, **caractérisée en ce qu'**au moins un élément de renforcement est prévu, avec lequel la déformation élastique de la portion de guidage (4b) du support de vitre (4) peut être réduite.

9. Fenêtre coulissante selon l'une quelconque des revendications 5 à 8, **caractérisée en ce qu'**il est prévu au moins un élément d'ajustement avec lequel le diamètre de la portion de guidage en forme de segment annulaire circulaire (4b) du support de vitre (4) peut être ajusté.

10. Fenêtre coulissante selon la revendication 9, **caractérisée en ce que** l'élément de renforcement et l'élément d'ajustement sont formés par le même composant (6).

11. Fenêtre coulissante selon la revendication 10, **caractérisée en ce que** le composant (6) qui forme simultanément l'élément de renforcement et l'élément d'ajustement, peut être inséré dans le côté frontal de la portion de guidage en forme de segment annulaire circulaire (4b) du support de vitre (4).

12. Fenêtre coulissante selon la revendication 10 ou 11, **caractérisée en ce que** le composant (6) qui forme simultanément l'élément de renforcement et l'élément d'ajustement, est formé par une douille à enfoncer.

13. Fenêtre coulissante selon l'une quelconque des revendications 10 à 12, **caractérisée en ce que** le composant (6) qui forme simultanément l'élément de renforcement et l'élément d'ajustement, présente une section transversale en forme de segment annulaire circulaire.

14. Fenêtre coulissante selon l'une quelconque des revendications 10 à 13, **caractérisée en ce que** le composant (6) qui forme simultanément l'élément de renforcement et l'élément d'ajustement, est réalisé en métal.
